# EUROPEAN PATENT SPECIFICATION

(11) **EP 0 325 720 B1**
(45) Date of publication and mention of the grant of the patent: **15.02.1995**
(21) Application number: 88119404.7
(22) Date of filing: 22.11.1988
(51) Int. Cl.: C02F 3/12, C02F 1/02

(54) **Method for treating a cyano-containing waste liquid**
Behandlungsverfahren für einen Cyanid enthaltenden flüssigen Abfall
Méthode pour le traitement d'un liquide usé contenant des cyanures

(30) Priority: 26.01.1988 JP 14970/88
(43) Date of publication of application: 02.08.1989
(73) Proprietor: NIHON PARKERIZING CO., LTD., Chuo-ku Tokyo 103 (JP)
(72) Inventor: Onishi, Akifusa, Hiratsuka-shi Kanagawa (JP); Nakanishi, Haruo, Sayama-shi Osaka (JP); Masuda, Masahiko, Daito-shi Osaka (JP)
(74) Representative: Cohausz & Florack Patentanwälte

(56) References cited:
- EP-A- 0 080 867
- FR-A- 1 209 369
- GB-A- 2 076 388
- US-A- 4 737 289
- JOURNAL OF THE WATER POLLUTION CONTROL FEDERATION, vol. 54, no. 2, February 1982, pages 153-164, Washington, US; A.F. GAUDY et al.: "Treatment of cyanidewaste by the extended aeration process"

## Description

### BACKGROUND OF INVENTION

### 1. Field of Invention

The present invention relates to a method for treating waste liquid of cyano-containing liquid which is used in the surface-treatment industries, such as soft-nitriding, liquid-nitriding, liquid-carburizing, plating, and chemical conversion coating of steels and the like. More particularly, the present invention relates to a post-treatment of cyano-containing liquid which has been treated by a thermal decomposition method. The liquid containing cyano-ions and/or complex cyano-ions are briefly referred to as the cyano-containing liquid.

### 2. Description of Related Art

Regarding a thermal decomposition method of the waste water containing alkali metal cyanide among the cyano-containing liquid, PPM, Vol.8, No.8, 1977, pages 58 - 68 ("Treatment Method of Cyano-waste liquid by Thermal Hydrolysis") indicates that, for example potassium cyanide of the cyano-containing liquid is thermally hydrolyzed under the following equation by means of heat treatment at 140°C or more, and, further the decomposition speed is more accelerated by further raising the heating temperature (page 59, item 3-1, and page (58), formula (1)). 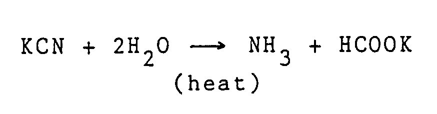
Japanese Examined Patent Publication No. 55-50718 relates to a thermal decomposition method of complex cyanide (Method for Treating Cyano-waste Liquid Containing Complex Ferrous Cyano-Ions) and is characterized by heat-treating at a temperature of 140°C or more a cyano-waste liquid containing complex ferrous cyano-ions , to which liquid an alkali metal hydroxide in an amount of 2 moles or more relative to 1 mole of complex cyano-ions is added. Preferred conditions for effectively decomposing the cyanogens to less than 1 ppm are allegedly pH 11 or more of the waste liquid, and 140°C or more, more preferably around 170°C of the treatment temperature. The decomposition reaction equation in this case is described by the same authors as in the above patent publication in page 60, left column of PPM, supra, as follows. 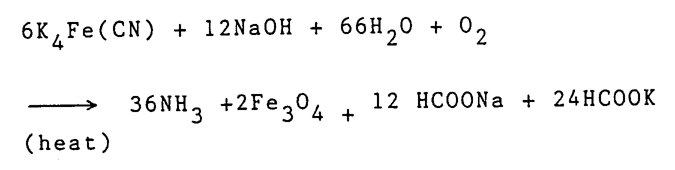
In addition, there is described that carbonate formed is caused to react with a part of the formate and, as a result the following reaction is likely to occur.

2HCOONa + 2NaOH + O₂→2Na₂CO₃ +2H₂O

The above described thermal decomposition method is very effective for the decomposition of cyanocompounds. However, the actual situation is that the formate is formed as a secondary product of the thermal decomposition of cyano-compounds but is difficult to convert into the sodium carbonate. Consequently, as the cyano-containing quantity of waste liquid is higher, the waste liquid tends to contain, after thermal decomposition, formate with a higher concentration. This in turn leads to a abnormal increase in COD ad BOD of the waste liquid. As a result, there arises such a problem that a supernatant liquid of the cyano.containing waste liquid, which has been subjected to heat treatment under the waste-liquid control, can not be discharged, as effluent water, as it is. It is therefore desired to develop a effective and economic post-treatment method of heat-treatment, by which the COD ad BOD values can be drastically decreased.

Since the formate can generally be easily removed by an activated sludge method, BOD and COD of the thermally decomposed waste liquid appears to be decreased by aerating of an active sludge method. However, since the concentration of ammonia and salt in the cyano-containing liquid, which has been treated by thermal decomposition method, is high, the formate becomes difficult-to-decompose, with the result that a satisfactory decrease of BOD and COD cannot be realized.

The waste liquid from treatment liquid for soft nitriding generally contains CN at a concentration of from 1,000 to 12,000 ppm. After being subjected to thermal decomposition of the waste liquid, the ammonium concentration of liquid is from 500 to 5,000 ppm, and the salt concentration is from 20 to 200 g/l. Particularly, the formate in such cyano-containing liquid is extremely difficult-to-decompose.

It is an object of the present invention to provide an effective and economic treatment method for the cyano-containing liquid, in order to drastically decrease COD and BOD of the thermally decomposed cyano-containing liquid.

This object is achieved by a method for treating a cyano-containing waste-liquid according to claim 1.

The cyano-concentration of said liquid is decreased to less than 1 ppm, and, in addition, by means of decomposing an organic formic compound to carbon dioxide gas and the like, COD and BOD can be drastically decreased.

The method according to the present invention consists of a primary treatment, i.e., thermal decomposition treatment of cyano-containing liquid, and a secondary treatment, i.e., post-treatment by an aerobic bacterium, to which a facultative anaerobe is adapted and converted. The decomposition of a difficult-to-decompose organic compound in the thermally decomposed cyano-containing liquid is presumably due to the fact that the organic compound-oxidizing and decomposing function of the aerobic bacteria, to which facultative anaerobes are adapted and converted, is outstandingly strengthened as compared with conventional aerobic bacteria used for an activated sludge method.

Any known thermal decomposition method can be employed in the present invention for the primary treatment. Preferred methods and conditions for the thermal decomposition are described hereinafter. If the whole cyano-ions in the cyano-containing liquid are in the form of CN⁻, such liquid is admitted in a pressure-resistant tank and is heated to 140°C or more, preferably approximately 170°C, so as to decompose the same. Heating means used may be an external heating or blowing-in of high pressure steam.

When the cyano-containing liquid contains complex cyano-ions, alkali metal hydroxide, such as NaOH and KOH, is added, prior to the thermal decomposition, to such liquid so as to render it alkaline. The additive quantity of alkali metal hydroxide in this case is at least twice as high as one mole of the complex cyano-ions, when they are Fe(CN)₆⁴⁻. In the case where other complex ions, such as trivalent metal ions are converted to complex, such as Fe(CN)₆³⁻, Cr(CN)₆³⁻, and the like are contained in a large amount, alkali metal hydroxide is added, for reasons of safety, in a ratio of at least three times the total moles of the complex ions. In the actual operation of waste liquid-treatment, it is cumbersome to carry out the above described controlling of mole concentration in every treatment batch. It is preferred that the concentration of cyano-containing liquid generated in steady state is monitored; the quantity of alkali metal hydroxide required for thermally decomposition of such waste liquid is empirically determined; the alkalinity of cyano-containing liquid with addition of alkali metal hydroxide is monitored by pH;
and, the pH value is controlled thereby carrying out the controlling mole concentration. Incidentally, pH is preferably 11 or more. The cyano-containing liquid having an adequate alkalinity is subjected to the thermal decomposition as described above. Regarding the decomposition of cyano-ions and complex cyano-ions, even if the total cyano-concentration in the cyano-containing liquid is as high as 50,000 ppm or more, approximately 70 % of the total cyano-compounds is decomposed by heating at approximately 170°C for 30 minutes, and approximately 99 % or more is decomposed after 60 minutes. This is decomposition attaining less than 1 ppm of the cyano-quantity in the cyano-containing liquid.

During the decomposition reaction, a large quantity of ammonia gas is generated. This gas is continuously withdrawn out of the pressure-resistant tank, while temperature in the tank is maintained, and the gas is introduced into a dilute sulfuric acid-tower so as to collect it as ammonium sulfate. The thermally decomposed liquid is then cooled and then its pH is adjusted to approximately 7.

Subsequently, the post-treatment, which is a characteristic of the present invention is carried out.

The thermally decomposed liquid is streamed through a multi-stage activated sludge tank, in which aerobic bacteria, to which facultative anaerobes are adapted and converted, are included, and organic compounds, such as formates and the like, are biologically decomposed while aerating. The treated liquid is then transferred from the activated sludge-treatment tank to a sedimentation tank to settle the sludge contained in the treatment liquid. The sludge sediment is returned to the activated sludge tank. However, the sludge sediment is withdrawn through the bottom of the sedimentation tank as excess sludge and this sludge is forcedly filtered by a filter press for removal, when the concentration of organic compounds is high and hence bacteria grows due to biological decomposition of the organic compounds. The supernatant liquid in the sedimentation tank is discharged as effluent water, while controlling the total cyano-concentration, BOD, and COD.

The aerobic bacteria used in the present invention are those to which facultative anaerobes are adapted and converted. A phenomenon appreciable during the adaptation of the facultative anaerobes is that COD rises, follows a course without great fluctuation for a certain period of time, and then falls. When falling of COD ends, the adaptation and degeneration ends completely. The resultant aerobic bacteria is used, under a treatment condition by an activated sludge method, to treat the primarily treated water. It is extremely easy, in this case, to decompose the difficult-to-decompose organic compounds having high ammonium- and salt-concentration and contained in the primary treated water.

After the primary treatment, a treatment by active carbon may be carried out.

An example of operation by a pilot plant is described hereinafter.

### BRIEF DESCRIPTION OF THE DRAWINGS

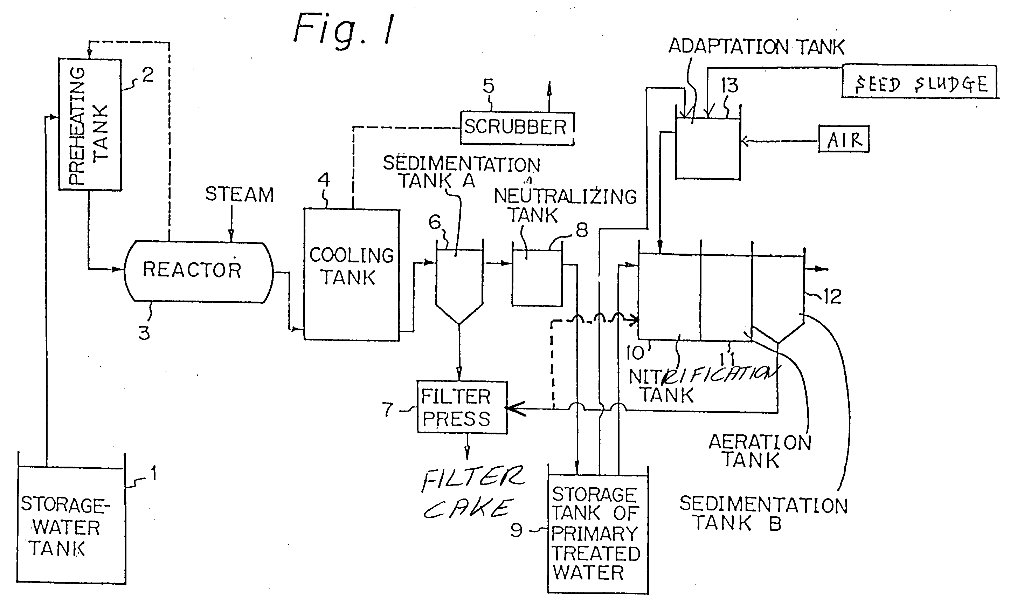

Fig. 1 is a flow chart of a pilot plant, in which the inventive method was carried out.

### 1. Primary Treatment

The cyano-containing waste liquid, which was used for soft nitriding, was stored in a stock-water tank 1. After heating in a preheating tank 2, the cyano-containing waste water was thermally hydrolyzed in a reactor (autoclave) 3 at 170°C and 7 kg/cm². The reaction formula is as follows.

KCN + 2H₂O→NH₃ +HCOOK (1)

6K₄Fe(CN)₆ + 12NaOH + 66H₂O + O₂ → 36NH₃ + 2Fe₃O₄ + 12HCOONa + 24HCOOK (2)

Free cyano-compound was caused to be reacted with water under high temperature and high pressure and was converted, as given in the formula (1) to ammonia and an organic compound, i.e., potassium or sodium formate. Complex cyano-compound was caused to react, as given in the formula (2) under the presence of caustic soda, to yield the ammonia and formate as in the formula (1). The iron in the complex was converted to triiron tetroxide, which became in the form of a fine precipitate and went out of the reaction system. Cyanic acid present in the waste water reacted as given in the formula (3) to yield ammonia, carbon dioxide gas, and potassium carbonate.

2KCNO + 3H₂O → K₂CO₃ + 2NH₃ + CO₂ (3)

According to formula (1), one mole of ammonia and one mole of formate were necessarily formed from one mole of cyano-compound. Most part of the so-formed ammonia was removed by means of ammonia-stripping in the cooling tank 4, which followed the autoclave 3 and was fixed as ammonium sulfate in the scrubber 5. Circulation water through the scrubber 5 was neutralized and then discharged as effluent water. The thermally decomposed water of primary cooling water-tank 4 was subjected to a liquid chromatography. The result was no detection of peaks of organic compounds other than the formate. The compound responsible for COD and BOD is therefore the formate. Incidentally, 4.9% value of the formic acid corresponds to a theoretical COD value.

### 2. Microbiological Treatment (Secondary Treatment)

An excess sludge of a sewage treatment plant was used as a seed sludge. The seed sludge was charged into an adaptation tank 13 at a rate of 0.3 m³/m³ (tank volume) and stirred. The primarily treated water was subsequently charged at a rate of 0.7 m³/m³ (tank volume). Into the tank air was blown at 0.5 m³/m³(tank volume)/h for 3 to 7 days so as to adapt the facultative anaerobes. Subsequently, air was blown at 0.33m³/m³(tank volume)/h for 7 to 10 days so as to convert the facultative anaerobes to aerobic bacteria. Primarily treated waste water was streamed into a nitrification tank 10 and was subjected to aeration (18 hours). After nitrification, the liquid was treated in an aeration tank 11 for 17 hours, and was then allowed to stand in a sedimentation tank 12 for 4 hours. The sediment was converted to a filter cake by a filter press 7. The supernatant liquid flowed from the sedimentation tank 12 as effluent water.

Quantity, pH and COD of storage water, which was subjected to the primary treatment, are shown in Tables 1, 2 and 3. Analysis value of the total cyano-quantity of the thermally decomposed water is in Table 1. COD and BOD of the effluent water are shown in Table 3.

**Table 1**

| Additive Quantity of Storage Water and Cyano-concentration of Primarily Treated Water | | |
|---|---|---|
| Lapse of Days in Plant | Storage Water (m³) | Cyano-concentration (ppm) |
| 18 | 10,000 | 0.26 |
| 24 | 3,900 | 0.26 |
| 26 | 5,900 | 0.34 |
| 30 | 2,000 | 0.59 |
| 31 | 7,900 | 0.61 |
| 32 | 7,900 | 0.44 |
| 43 | 3,000 | 0.99 |
| 58 | 9,100 | 0.32 |
| 59 | 8,900 | 0.39 |
| 60 | 7,000 | 0.38 |

**Table 2**

| pH Measured Value | | |
|---|---|---|
| Lapse of Days in Plant | Storage Water | Primarily Treated Water |
| 1 | 10.8 | |
| 2 | 11.1 | |
| 9 | 10.9 | 10.4 |
| 35 | | 10.0 |
| 36 | | 10.0 |
| 37 | | 10.4 |
| 38 | | 10.3 |
| 42 | | 10.2 |
| 46 | | 10.2 |
| 49 | | 10.3 |
| 56 | | 10.6 |

**Table 3**

| Measured Results of COD and BOD | | | |
|---|---|---|---|
| Lapse of Days in Plant | Primarily Treated Water | Effluent Water(COD) | Effluent Water(BOD) |
| 17 | 1,000 | | |
| 18 | | 98 | 50 |
| 22 | 640 | | |
| 23 | | 140 | 65 |
| 24 | 690 | 140 | 63 |
| 25 | 690 | 130 | 60 |
| 29 | 630 | 97 | 47 |
| 30 | 700 | 120 | 53 |
| 31 | 680 | 100 | 49 |
| 32 | 600 | 240 | 78 |
| 43 | 750 | 77 | 39 |
| 46 | 1200 | 100 | 55 |
| 58 | 1300 | 73 | 40 |
| 59 | 900 | 65 | 40 |
| 60 | 910 | 87 | 43 |

### Comparative Example

### 1. Primary Treatment

The primary treatment was carried out by the same method as in the Example.

### 2. Microbiological Treatment (Secondary Treatment)

Waste water, which was primarily treated by thermal decomposition, was subjected to a batch treatment by conventional activated sludge method with the use of aerobic bacteria.

The results are shown in Table 4.

**Table 4**

| Measured Results of pH, COD, and BOD | | | |
|---|---|---|---|
| Lapse of Days | pH | COD (ppm) | BOD (ppm) |
| Storage Water | 8.5 | 720 | 321 |
| 2 | 8.8 | 798 | 399 |
| 5 | 9.1 | 780 | 576 |
| 6 | 9.1 | 645 | 786 |
| 7 | 9.3 | 492 | 624 |
| 9 | 9.3 | 492 | 624 |
| 10 | 9.3 | 456 | 675 |
| 12 | 9.4 | 324 | 435 |
| 14 | 9.4 | 330 | 435 |
| 15 | 9.4 | 324 | 531 |

From the comparison of the Example and the Comparative Example, it is apparent that the conventional activated sludge method is not effective for decreasing COD and BOD, while the inventive method is effective for decreasing COD and BOD for a long period of time.

As is understood from the above description, a difficult-to-decompose formic acid compound, which is contained in the thermally decomposed liquid of cyano-containing liquid, is decomposed, thereby yielding easily a treated liquid having low COD and BOD. The secondary treatment process is as effective as the conventional activated sludge method. The efficiency of the inventive method is the one of thermal decomposition method plus the one of activated sludge method.

## Claims

1. A method for treating a cyano-containing waste liquid, wherein the cyano-containing waste liquid is subjected to thermal decomposition treatment at temperatures of 140°C and higher and said primarily treated waste-liquid is further subjected to a secondary treatment by an active sludge method, characterized in that as active sludge in said active sludge method there is used a product obtained by mixing primarily treated waste- liquid with a seed sludge, adapting the facultative anaerobes and converting said facultative anaerobes to aerobic bacteria.

2. A method according to claim 1, said cyano-containing waste liquid includes a cyano complex, and, in the thermal decomposition step, an alkali metal hydroxide is added to the cyano-containing waste liquid.

3. A method according to claim 1 or 2, wherein said thermal decomposition is carried out to decrease the concentration of cyano-compound to 1 ppm or less.

## Patentansprüche

1. Verfahren zur Behandlung eines cyanidhaltigen flüssigen Abfalls, wobei der cyanidhaltige flüssige Abfall einer thermischen Abbaubehandlung bei Temperaturen von 140°C und mehr unterzogen und dieser vorbehandelte cyanidhaltige flüssige Abfall weiterhin einer zweiten Behandlung durch einen aktivierten Schlamm unterzogen wird, dadurch gekennzeichnet, daß als aktivierter Schlamm in diesem Verfahren ein Produkt eingesetzt wird, das durch Vermischen des vorbehandelten flüssigen Abfalls mit einem Impfschlamm erhalten wird, die fakultativen Anaerobier angepaßt und diese fakultativen Anaerobier in aerobe Bakterien umgewandelt werden.

2. Ein Verfahren nach Anspruch 1, dadurch gekennzeichnet, daß der cyanidhaltige flüssige Abfall einen Cyankomplex enthält und daß in der thermischen Abbaustufe ein Alkalimetallhydroxid dem cyanidhaltigen flüssigen Abfall zugesetzt wird.

3. Ein Verfahren nach Anspruch 1 oder 2, dadurch gekennzeichnet, daß der thermische Abbau durchgeführt wird, um die Konzentration der Cyanidverbindung auf 1 ppm oder weniger zu senken.

## Revendications

1. Procédé de traitement d'un liquide résiduaire contenant des composés cyanés, selon lequel le liquide résiduaire contenant des composes cyanés est soumis à un traitement de décomposition thermique à des températures de 140 °C et plus, et ce liquide résiduaire obtenu par traitement primaire, est ensuite soumis à un traitement secondaire selon un procédé à boue active, caractérisé en ce que, comme boue active dans ce procédé à boue active, on emploie un produit obtenu en mélangeant du liquide résiduaire obtenu par traitement primaire, avec une boue d'ensemencement, en adaptant les anaérobies facultatifs et en convertissant ces anaérobies facultatifs en bactéries aérobies.

2. Procédé selon la revendication 1, dans lequel le liquide résiduaire contenant des composés cyanés, comprend un complexe cyané, et dans lequel, dans l'opération de décomposition thermique, on ajoute un hydroxyde de métal alcalin dans le liquide résiduaire contenant des composés cyanés.

3. Procédé selon la revendication 1 ou 2, dans lequel la décomposition thermique est effectuée afin de réduire la concentration en composé cyané jusqu'à 1 ppm ou moins.
